# FASCICULE DE BREVET EUROPEEN

(11) **EP 2 042 806 B1**
(45) Date de publication et mention de la délivrance du brevet: **07.06.2017**
(21) Numéro de dépôt: 08164449.4
(22) Date de dépôt: 16.09.2008
(51) Int. Cl.: F23R 3/06, F23R 3/50

(54) **Chambre de combustion d'une turbomachine**
Brennkammer einer Strömungsmaschine
Combustion chamber of a turbomachine

(30) Priorité: 26.09.2007 FR 0706725
(43) Date de publication de la demande: 01.04.2009
(73) Titulaire: SNECMA, 75015 Paris (FR)
(72) Inventeur: Cayre, Alain, 77830 Pamfou (FR); Sandelis, Denis, Jean, Maurice, 77370 Nangis (FR)
(74) Mandataire: Ramey, Daniel

(56) Documents cités:
- EP-A- 1 092 925
- EP-A- 1 445 537
- GB-A- 2 212 607
- RU-C1- 2 039 323
- US-A- 4 380 906
- US-A- 4 566 280
- US-A- 4 723 413
- US-A- 4 821 522
- US-A- 5 289 677

## Description

La présente invention concerne une chambre annulaire de combustion d'une turbomachine telle qu'un turboréacteur ou un turbopropulseur d'avion.

Les documents US-A-4,723,413 et GB-A-2 212 607 décrivent des moyens de refroidissement d'une paroi d'une chambre de combustion de turbomachine.

Une chambre de combustion de ce type comprend des parois de révolution coaxiales qui s'étendent l'une à l'intérieur de l'autre et qui sont reliées à leurs extrémités amont par une paroi annulaire de fond de chambre comportant des ouvertures de montage d'injecteurs de carburant.

En fonctionnement, une partie du débit d'air fourni par un compresseur d'alimentation de la chambre passe à travers les ouvertures de la paroi de fond de chambre et est mélangée au carburant amené par les injecteurs, ce mélange air/carburant étant ensuite brûlé à l'intérieur de la chambre. Une autre partie de ce débit d'air contourne la chambre de combustion puis pénètre dans la chambre à travers des multiperforations formées dans les parois interne et externe de la chambre pour refroidir ces parois. Le débit d'air de refroidissement de la chambre représente dans ce cas environ 25 à 30% du débit d'air alimentant la chambre.

La circulation d'air à travers les multiperforations de la chambre assure un refroidissement homogène de la chambre et permet d'avoir un gradient de température en direction radiale dans la veine de combustion relativement faible. Cependant, cette technologie n'est pas entièrement satisfaisante car la température à la périphérie interne et à la périphérie externe de la veine reste relativement importante, ce qui peut provoquer l'apparition de criques et de fissures sur les parois de la chambre.

Par ailleurs, les parois de la chambre sont reliées à leurs extrémités aval à des brides annulaires de fixation sur des carters interne et externe de la chambre. Ces brides présentent en fonctionnement des gradients de température importants en direction radiale.

De plus, un distributeur d'entrée de turbine est monté en sortie de la chambre de combustion et comprend des viroles coaxiales entre lesquelles s'étendent des aubes sensiblement radiales. Les viroles du distributeur sont dans le prolongement axial des parois de la chambre et coopèrent à étanchéité avec leurs brides de fixation. Les viroles du distributeur sont également exposées aux températures importantes qui règnent aux périphéries interne et externe de la veine de combustion. Il est donc en général nécessaire de prévoir des multiperforations de passage d'air de refroidissement sur ces viroles.

Une solution à l'ensemble de ces problèmes consisterait à augmenter la fraction du débit d'air (par exemple jusqu'à 35-45%) allouée au refroidissement de la chambre. Cependant, cette solution n'est pas non plus satisfaisante car elle entraîne un gradient de température en direction radiale dans la veine très important et des températures extrêmes au coeur du foyer de combustion.

L'invention a notamment pour but d'apporter une solution simple, efficace et économique à ces problèmes.

Elle propose à cet effet une chambre annulaire de combustion d'une turbomachine, comprenant deux parois de révolution coaxiales s'étendant l'une à l'intérieur de l'autre et délimitant entre elles la chambre, chacune de ces parois comportant au moins une gorge annulaire s'étendant autour de l'axe longitudinal de la chambre et débouchant à l'intérieur de la chambre, cette gorge étant alimentée en air de refroidissement par des orifices formés dans la paroi et débouchant à une de leurs extrémités dans la gorge et à l'autre de leurs extrémités à l'extérieur de la chambre, caractérisée en ce que la gorge a en section une forme sensiblement en U ou en V qui est évasée vers l'aval et comporte deux surfaces annulaires latérales inclinées par rapport à la zone de la paroi au niveau de laquelle est située la gorge.

De manière générale, l'invention permet de former un film turbulent d'air de refroidissement destiné à s'écouler le long des parois interne et externe de la chambre, et éventuellement des viroles du distributeur situé en aval.

L'inclinaison des surfaces latérales de la gorge par rapport à la paroi de la chambre permet à l'air de refroidissement de pénétrer plus en profondeur dans la chambre et donc de refroidir une couche annulaire d'épaisseur relativement importante de la veine de combustion. La profondeur de pénétration de l'air de refroidissement et le débit d'alimentation en air de la gorge doivent être suffisants pour refroidir les périphéries interne et externe de la veine sans toutefois gêner la combustion des gaz dans la chambre. L'invention est particulièrement adaptée, mais non exclusivement, à une chambre comportant des multiperforations pour pouvoir refroidir les périphéries interne et externe de la veine sans toutefois augmenter le débit d'air de refroidissement de la chambre.

La gorge selon l'invention a en section une forme en U ou en V qui est évasée vers l'aval pour diminuer la vitesse d'écoulement de l'air dans la gorge et la chambre. La combinaison de l'inclinaison de la gorge et de la forme évasée ou élargie vers l'aval de cette gorge permet de mieux maîtriser la profondeur de pénétration de l'air de refroidissement dans la veine de combustion.

A titre d'exemple, l'angle formé entre chaque surface latérale de la gorge et la zone de la paroi où est située la gorge, est compris entre 5 et 35° environ. Les surfaces latérales de la gorge divergent par exemple l'une de l'autre vers l'aval d'un angle compris entre 2 et 10° environ. L'extrémité aval de la gorge peut par exemple être plus large de 1 à 2mm environ que la base de la gorge.

Selon une autre caractéristique de l'invention, la gorge est formée à l'extrémité aval de chaque paroi de la chambre, à proximité d'une bride annulaire de fixation de cette paroi à un carter de la chambre.

Un film d'air est ainsi formé au voisinage de l'extrémité aval de chaque paroi de la chambre et apporte de nombreux avantages en plus des avantages déjà décrits plus haut:
- il permet de refroidir l'extrémité aval de la paroi de chambre ;
- il participe également au refroidissement de la virole du distributeur de turbine situé directement en aval. Il est donc possible de diminuer le nombre de multiperforations sur ces viroles qui sont complexes et coûteuses à réaliser ;
- une partie de l'air sortant de la gorge pénètre également dans un espace annulaire formé entre la bride de fixation et la virole du distributeur, ce qui se traduit par une meilleure ventilation de la bride et donc par une nette diminution du gradient de température en direction radiale de cette bride.

Avantageusement, la gorge est alimentée en air par une rangée annulaire de premiers orifices qui s'étendent sensiblement parallèlement à la zone de la paroi où est située la gorge. Ces premiers orifices sont parallèles à la paroi de la chambre et sont donc inclinés par rapport aux surfaces latérales de la gorge. Ces orifices débouchent par exemple dans le fond de la gorge et l'air qui sort de ces orifices vient impacter sur une surface latérale de la gorge pour améliorer le refroidissement de la paroi de chambre par conduction thermique

Les premiers orifices peuvent également être légèrement inclinés par rapport à la zone précitée de la paroi, par exemple de l'ordre de 1 à 15° environ.

La gorge peut également être alimentée en air par une rangée annulaire de seconds orifices qui sont sensiblement perpendiculaires à la zone de la paroi où est située la gorge. Ces seconds orifices sont également inclinés par rapport aux surfaces latérales de la gorge et l'air qui sort par ces orifices vient impacter sur une de ces surfaces latérales pour refroidir la chambre par conduction. L'impact de l'air de refroidissement sur les surfaces latérales de la gorge permet également de réduire la vitesse de pénétration de l'air dans la chambre.

Ces seconds orifices peuvent également être légèrement inclinés par rapport à une normale à la zone précitée de la paroi, par exemple de l'ordre de 1 à 20° environ.

Préférentiellement, les premiers orifices sont disposés en quinconce avec les seconds orifices de façon à assurer un refroidissement homogène de l'extrémité aval de chaque paroi et à former un film d'air d'épaisseur constante autour de l'axe longitudinal de la chambre.

La chambre comprend par exemple entre 100 et 500 orifices d'alimentation en air de la gorge. Ces orifices ont un diamètre compris entre 0,5 et 2mm environ, et permettent de calibrer le débit d'alimentation en air de la gorge. Ce débit d'air représente environ 1 à 2% du débit d'alimentation en air de la chambre.

L'invention concerne également une turbomachine, telle qu'un turboréacteur ou un turbopropulseur d'avion, caractérisée en ce qu'elle comprend une chambre de combustion telle que décrite ci-dessus.

Dans le cas où un distributeur est monté directement en aval de la chambre de combustion, la partie d'extrémité aval de la paroi externe de la chambre où est située la gorge a un diamètre qui augmente vers l'aval et qui est légèrement inférieur au diamètre interne de la virole externe du distributeur située en aval. En fonctionnement, ces pièces se dilatent en direction radiale et la différence de diamètre entre la paroi externe de la chambre et la virole externe du distributeur tend à disparaître de sorte que ces pièces soient parfaitement alignées en direction axiale.

L'invention sera mieux comprise et d'autres caractéristiques, détails et avantages de la présente invention apparaîtront plus clairement à la lecture de la description suivante faite à titre d'exemple non limitatif en référence aux dessins annexés dans lesquels :
- la figure 1 est une demi-vue schématique en coupe axiale d'une chambre de combustion de turbomachine selon la technique antérieure ;
- la figure 2 est un graphe représentant différents profils de température dans la veine d'une chambre de combustion ;
- la figure 3 est une demi-vue schématique en coupe axiale d'une chambre de combustion de turbomachine selon l'invention ;
- la figure 4 est une vue agrandie du détail I₄ de la figure 3 ; et
- la figure 5 est une vue agrandie du détail I₅ de la figure 3.

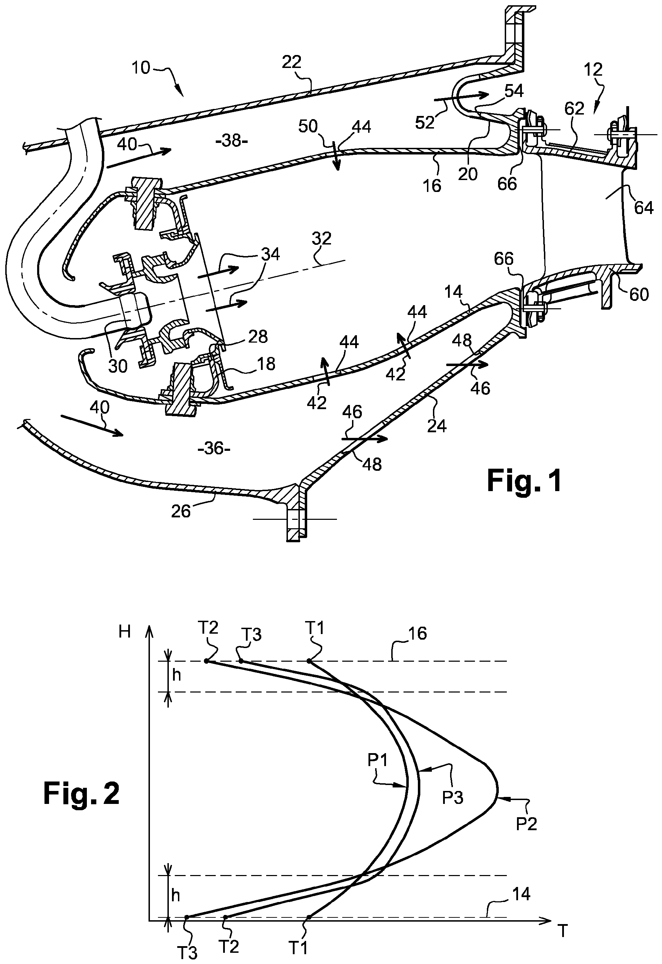

On se réfère d'abord à la figure 1 qui représente une chambre annulaire de combustion 10 d'une turbomachine, telle qu'un turboréacteur ou un turbopropulseur d'avion, qui est agencée en aval d'un compresseur et d'un diffuseur (non représentés), et en amont d'un distributeur 12 d'entrée d'une turbine haute-pression.

La chambre de combustion comprend des parois de révolution interne 14 et externe 16 qui s'étendent l'une à l'intérieur de l'autre et qui sont reliées en amont à une paroi annulaire 18 de fond de chambre. La paroi externe 16 de la chambre est reliée à son extrémité aval à une bride annulaire externe 20 qui est fixée à sa périphérie externe sur un carter externe 22 de la chambre, et sa paroi interne 14 est reliée à son extrémité aval à une bride annulaire interne 24 qui est fixée à sa périphérie interne sur un carter interne 26 de la chambre.

La paroi annulaire 18 de fond de chambre comporte des ouvertures 28 à travers lesquelles passe de l'air provenant du compresseur et du carburant amené par des injecteurs (non représentés) fixés sur le carter externe 22. Chaque injecteur comprend une tête 30 d'injection de carburant montée dans une ouverture 28 de la paroi annulaire 18 et alignée sur l'axe 32 de cette ouverture 28.

Le distributeur 12 est fixé en aval de la chambre par des moyens appropriés et comprend des viroles interne 60 et externe 62 qui s'étendent l'une à l'intérieur de l'autre et qui sont reliées entre elles par des aubes radiales 64. La virole externe 62 du distributeur est alignée axialement avec la partie d'extrémité aval de la paroi externe 16 de la chambre, et sa virole interne 60 est alignée axialement avec la partie d'extrémité aval de la paroi interne 14 de la chambre.

Les viroles 60, 62 du distributeur délimitent avec les brides 20, 24 de fixation de la chambre deux espaces annulaires 66, respectivement interne et externe, qui débouchent à une de leurs extrémités à l'intérieur de la chambre et qui sont fermés à l'autre de leurs extrémités par des moyens d'étanchéité montés entre les viroles 60, 62 et les brides 20, 24.

Une partie du débit d'air fourni par le compresseur situé en amont passe par les ouvertures 28 et alimente la chambre de combustion 10 (flèches 34), l'autre partie du débit d'air alimentant des espaces annulaires interne 36 et externe 38 de contournement de la chambre (flèches 40).

L'espace interne 36 est formé entre le carter interne 26 et la paroi interne 14 de la chambre, et l'air qui passe dans cet espace se partage en un débit 42 qui pénètre dans la chambre 10 par des orifices 44 et des multiperforations (non représentées) de la paroi interne 14, et en un débit 46 qui passe à travers des trous 48 de la bride interne 24 de la chambre pour aller refroidir des composants, non représentés, situés en aval de cette chambre.

L'espace externe 38 est formé entre le carter externe 22 et la paroi externe 16 de la chambre, et l'air qui passe dans cet espace se partage en un débit 50 qui pénètre dans la chambre 10 par des orifices 44 et des multiperforations non représentées de la paroi externe 16 et en un débit 52 qui passe à travers des trous 54 de la bride externe 20 pour aller refroidir des composants en aval. L'air qui passe à travers les trous 48 et 54 des brides 20, 24 alimente par exemple des multiperforations non représentées formées dans les viroles 60, 62 du distributeur 12 pour assurer leur refroidissement.

Le débit d'air 44, 50 de refroidissement de la chambre, c'est-à-dire le débit d'air passant à travers les orifices 44 et les multiperforations des parois 14, 16 de la chambre représente environ 25 à 30% du débit d'air alimentant la chambre. Les orifices 44 et les multiperforations des parois 14, 16 de la chambre sont régulièrement répartis autour de l'axe de la chambre.

En fonctionnement, le profil de température P1 en direction radiale dans la veine de combustion est tel que représenté en figure 2. Le profil P1 a une forme générale arrondie dont la convexité est orientée vers l'aval. Ce profil P1 indique que la température à l'intérieur de la veine varie relativement peu en direction radiale entre la périphérie interne de la veine, située au niveau de la paroi interne 14, et la périphérie externe de la veine, située au niveau de la paroi externe 16. Ce profil est caractérisé par un front (partie médiane de la courbe) relativement plat, ce front étant relié à chacune de ses extrémités à une traîne relativement courte qui se termine en T1 à une température relativement importante. La température des gaz de combustion à proximité des parois 14, 16 de la chambre est de ce fait proche de celle du coeur même du foyer de combustion et est donc très importante, ce qui se traduit par de nombreux inconvénients décrits plus haut.

Une solution à ce problème consiste à augmenter de 10 à 15% le débit d'air de refroidissement de la chambre. Dans ce cas, la température dans la veine de combustion a un profil P2 qui est caractérisé par un front très pointu et des traînes relativement longues se terminant en T2 par des températures acceptables pour les parois 14, 16 de la chambre. Cependant, la température au coeur du foyer de combustion (pointe du front) est trop élevée.

L'invention permet d'apporter une solution efficace à ce problème en injectant de l'air de refroidissement dans la chambre pour former des films d'écoulement d'air au niveau de la périphérie interne et de la périphérie externe de la chambre. Lorsque l'invention est combinée aux multiperforations des parois 14, 16 de la chambre, la température régnant à l'intérieur de la veine a un profil P3 qui présente sensiblement le front du profil P1 et les traînes du profil P2, et se termine donc par des températures T3 relativement faibles aux périphéries interne et externe de la veine.

L'air est injecté dans la chambre à une vitesse, une profondeur, et un angle d'incidence qui sont déterminés pour bien maîtriser l'épaisseur en direction radiale de chaque film d'air et donc bien maîtriser l'évolution de la température des gaz de combustion aux périphéries de la veine. Dans l'exemple représenté en figure 2, chaque film a une hauteur h ou dimension radiale qui représente environ 10 à 15% de la hauteur totale H de la veine de combustion.

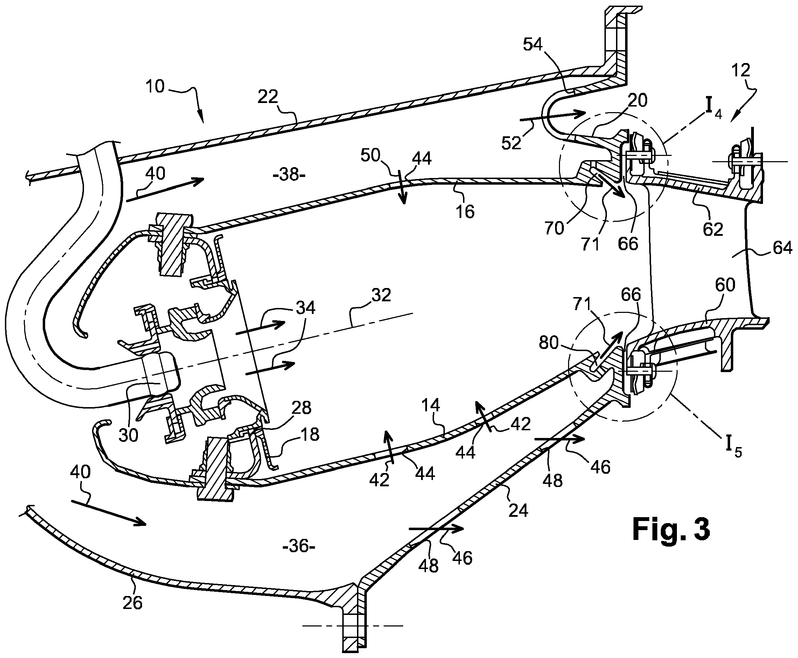

Les films d'air sont par exemple formés aux extrémités aval des parois 14, 16 de la chambre, comme c'est le cas dans le mode de réalisation représenté aux figures 3 à 5.

Dans cet exemple de réalisation, chaque paroi 14, 16 comprend au voisinage de sa bride aval de fixation 20, 24 une gorge annulaire 70, 80 de formation d'un film d'air, cette gorge débouchant à son extrémité aval dans la chambre et étant reliée à son extrémité amont par des orifices de la paroi aux espaces interne 36 et externe 38, respectivement.

L'air qui passe dans l'espace interne 36 se partage donc en un débit 42 qui pénètre dans la chambre 10 par les orifices 44 et les multiperforations de la paroi interne 14, en un débit 71 qui alimente la gorge 70 de cette paroi, et en un débit 46 qui passe à travers les trous 48 de la bride interne 24. L'air qui passe dans l'espace externe 38 se partage en un débit 50 qui pénètre dans la chambre 10 par les orifices 44 et les multiperforations de la paroi externe 16, en un débit 71 qui alimente la gorge 80 de la paroi 16, et en un débit 52 qui passe à travers les trous 54 de la bride 20.

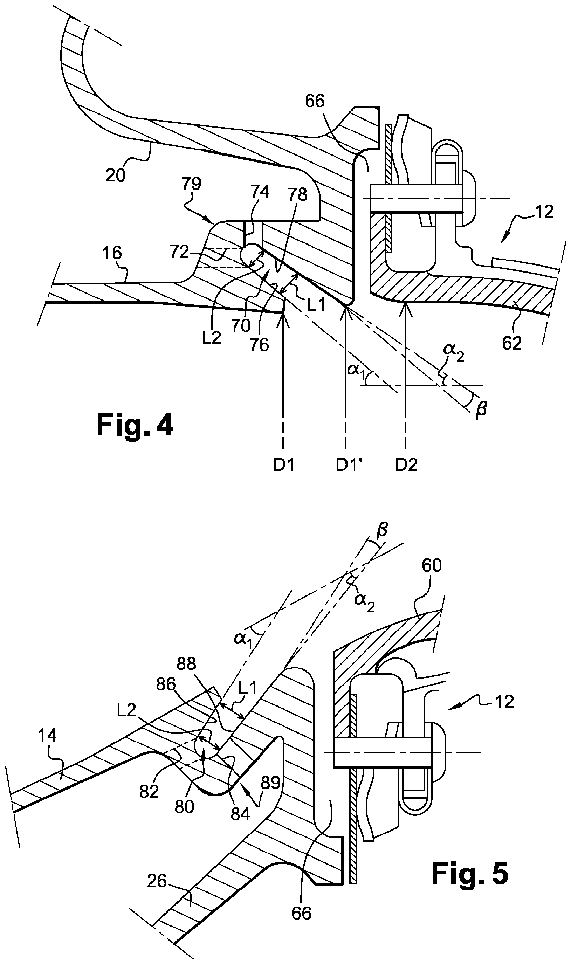

La gorge 70 de la paroi externe 16, mieux visible en figure 4, a une forme générale tronconique qui s'étend d'amont en aval vers l'intérieur, cette gorge étant inclinée par rapport à la partie d'extrémité aval de la paroi 16.

La gorge 70 a en section une forme en U ou en V qui s'évase ou s'élargit vers l'aval. La gorge 70 est délimitée par deux surfaces annulaires amont 76 et aval 78 qui divergent l'une de l'autre vers l'aval et qui sont reliées l'une à l'autre à leurs extrémités amont par un fond de gorge de forme arrondie concave. La largeur de la gorge varie donc d'amont en aval et est maximale à son extrémité aval. La largeur L1 de la gorge à son extrémité aval peut être supérieure de 1 à 2mm environ de sa largeur L2 au voisinage du fond de la gorge.

La gorge 70 est alimentée en air de refroidissement par deux rangées annulaires d'orifices comprenant des premiers orifices 72 qui s'étendent sensiblement parallèlement à la partie d'extrémité aval de la paroi 16, et des seconds orifices 74 qui sont sensiblement perpendiculaires à cette partie d'extrémité. Les premiers et seconds orifices 72, 74 débouchent à une de leurs extrémités dans l'espace externe 38 et à l'autre de leurs extrémités au niveau du fond de la gorge. Les premiers orifices 72 sont avantageusement disposés en quinconce avec les seconds orifices 74. La gorge 70 est par exemple alimentée par 100 à 500 orifices 72, 74 qui ont un diamètre compris entre 0,5 et 2mm environ. Les orifices 72, 74 calibrent le débit d'air d'alimentation de la gorge 70 qui représente environ 1 à 2% du débit d'alimentation en air de la chambre.

L'air qui passe à travers les premiers orifices 72 vient impacter sur la surface latérale aval 78 de la gorge et l'air qui sort des seconds orifices 74 vient impacter sur la surface latérale amont 76 de la gorge, ce qui permet de refroidir par conduction thermique la partie d'extrémité aval de la paroi externe 16 ainsi que la bride de fixation 20.

En variante, les premiers orifices 72 sont inclinés d'un angle faible, par exemple compris entre 1 et 15°, par rapport à la partie d'extrémité aval de la paroi. Les seconds orifices 74 peuvent également être inclinés d'un angle faible, compris entre 1 et 20°, par rapport à une normale à la partie d'extrémité aval de la paroi 16.

Dans l'exemple représenté, la gorge annulaire 70 est formée dans une surépaisseur annulaire 79 prévue à l'extrémité aval de la paroi externe 16, cette surépaisseur étant reliée à son extrémité aval à la périphérie interne de la bride 20. Préférentiellement, cette surépaisseur 79 présente en aval de la gorge 70 un diamètre interne D1' qui est légèrement supérieur au diamètre interne D1 de cette surépaisseur en amont de la gorge, et qui est légèrement inférieur au diamètre interne D2 de la virole 62 du distributeur situé en aval. La différence entre D1 et D2 est de l'ordre de 1 à 3mm environ et est destinée à disparaître en fonctionnement grâce à la dilatation thermique différentielle de la paroi externe 16 et de la virole 62.

Comme cela a été décrit dans ce qui précède, le film d'air formé à l'extrémité aval de la paroi externe 16 permet de refroidir cette paroi, de diminuer la température dans la veine de combustion sur une hauteur ou dimension radiale donnée, de refroidir la bride externe 20 par circulation d'air dans l'espace annulaire 66 situé entre la bride 20 et la virole 62 du distributeur, et également de refroidir cette virole 62 qui peut alors avoir un nombre réduit voire nul de multiperforations.

La gorge 80 de la paroi interne 14, mieux visible en figure 5, a une forme générale tronconique qui s'étend d'amont en aval vers l'extérieur, cette gorge étant inclinée par rapport à la partie d'extrémité aval de la paroi 14 et étant également évasée vers l'aval. Elle est formée dans une surépaisseur annulaire 89.

La gorge 80 de la paroi interne est similaire à la gorge 70 de la paroi externe. La description de la gorge 70 ci-dessus s'applique donc également à la gorge 80. Les surfaces annulaires amont 86 et aval 88 de la gorge divergent l'une de l'autre vers l'aval. La gorge 80 est alimentée en air par deux rangées annulaires de premiers et de seconds orifices 82, 84 qui débouchent à une de leurs extrémités dans l'espace interne 36 et à l'autre de leurs extrémités au niveau du fond de la gorge 80.

Le film d'air formé à l'extrémité aval de la paroi interne 14 permet également de refroidir la paroi interne, la bride de fixation 24 et la virole 60 du distributeur.

Dans l'exemple particulier représenté aux figures 3 à 5, chaque paroi de la chambre comprend une seule gorge annulaire 70, 80 de formation d'un film d'air. En variante, chaque paroi de la chambre peut comprendre deux ou plusieurs de ces gorges.

## Revendications

1. Chambre annulaire de combustion d'une turbomachine, comprenant deux parois de révolution (14, 16) coaxiales s'étendant l'une à l'intérieur de l'autre et délimitant entre elles la chambre, chacune de ces parois comportant au moins une gorge annulaire (70, 80) s'étendant autour de l'axe longitudinal de la chambre et débouchant à l'intérieur de la chambre, cette gorge étant alimentée en air de refroidissement par des orifices (72, 74, 82, 84) formés dans la paroi et débouchant à une de leurs extrémités dans la gorge et à l'autre de leurs extrémités à l'extérieur de la chambre, **caractérisée en ce que** la gorge a en section une forme sensiblement en U ou en V qui est évasée vers l'aval et comporte deux surfaces annulaires latérales (76, 78, 86, 88) inclinées par rapport à la zone de la paroi au niveau de laquelle est située la gorge.

2. Chambre selon la revendication 1, **caractérisée en ce que** la gorge (70, 80) est formée à l'extrémité aval de chaque paroi (14, 16) de la chambre, à proximité d'une bride annulaire (20, 24) de fixation de cette paroi à un carter (22, 26) de la chambre.

3. Chambre selon la revendication 1 ou 2, **caractérisée en ce que** l'angle (α1, α2) formé entre chaque surface latérale (76, 78, 86, 88) de la gorge et la zone de la paroi où est située la gorge, est compris entre 5 et 35° environ.

4. Chambre selon l'une des revendications précédentes, **caractérisée en ce que** les surfaces latérales (76, 78, 86, 88) de la gorge divergent l'une de l'autre vers l'aval d'un angle (β) compris entre 2 et 10° environ.

5. Chambre selon l'une des revendications précédentes, **caractérisée en ce que** l'extrémité aval de la gorge (70, 80) est plus large de 1 à 2mm environ que la base de la gorge.

6. Chambre selon l'une des revendications précédentes, **caractérisée en ce que** la gorge (70, 80) est alimentée en air par une rangée annulaire de premiers orifices (72, 82) qui s'étendent sensiblement parallèlement à la zone de la paroi où est située la gorge.

7. Chambre selon la revendication 6, **caractérisée en ce que** la gorge est alimentée en air par une rangée annulaire de seconds orifices (74, 84) qui sont sensiblement perpendiculaires à la zone de la paroi où est située la gorge.

8. Chambre selon la revendication 7, **caractérisée en ce que** les premiers orifices (72, 82) sont disposés en quinconce avec les seconds orifices (74, 84).

9. Chambre selon l'une des revendications précédentes, **caractérisée en ce que** les orifices d'alimentation (72, 74, 82, 84) débouchent à une de leurs extrémités au niveau du fond de la gorge.

10. Chambre selon l'une des revendications précédentes, **caractérisée en ce que** les orifices d'alimentation (72, 74, 82, 84) ont un diamètre compris entre 0,5 et 2mm environ.

11. Chambre selon l'une des revendications précédentes, **caractérisée en ce qu'**elle comprend entre 100 et 500 orifices (72, 74, 82, 84) d'alimentation en air de la gorge.

12. Turbomachine, telle qu'un turboréacteur ou un turbopropulseur d'avion, **caractérisée en ce qu'**elle comprend une chambre de combustion (10) selon l'une des revendications précédentes.

13. Turbomachine selon la revendication 12, comprenant un distributeur (12) monté en aval de la chambre de combustion (10), ce distributeur comportant deux viroles (60, 62) coaxiales respectivement interne et externe entre lesquelles s'étendent des aubes (64), **caractérisée en ce que** la partie d'extrémité aval de la paroi externe (16) de la chambre où est située la gorge (70) a un diamètre qui augmente vers l'aval et qui est légèrement inférieur au diamètre interne de la virole externe (62) du distributeur.

## Patentansprüche

1. Ringförmige Brennkammer für eine Turbomaschine, enthaltend zwei koaxial verlaufende Umlaufwände (14, 16), von denen sich die eine innerhalb der anderen erstreckt und die zwischen sich die Kammer eingrenzen, wobei jede dieser Wände zumindest eine ringförmige Nut (70, 80) aufweist, die sich um die Längschase der Kammer herum erstreckt und innerhalb der Kammer ausmündet, wobei diese Nut über Öffnungen (72, 74, 82, 84) mit Kühlluft versorgt wird, die in der Wand ausgebildet sind und mit einem ihrer Enden in die Nut münden und mit ihrem anderen Ende außerhalb der Kammer ausmünden, **dadurch gekennzeichnet, dass** die Nut eine im Wesentlichen U- bzw. V-förmige Querschnittsform hat, die sich nach stromabwärts erweitert und zwei ringförmige Seitenflächen (76, 78, 86, 88) aufweist, die bezüglich des Wandbereichs geneigt verlaufen, bei dem sich die Nut befindet.

2. Kammer nach Anspruch 1, **dadurch gekennzeichnet, dass** die Nut (70, 80) am stromabwärtigen Ende einer jeden Wand (14, 16) der Kammer in der Nähe eines ringförmigen Befestigungsflansches (20, 24) zum Befestigen dieser Wand an ein Gehäuse (22, 26) der Kammer ausgebildet ist.

3. Kammer nach Anspruch 1 oder 2, **dadurch gekennzeichnet, dass** der Winkel (α1, α2), der zwischen jeder Seitenfläche (76, 78, 86, 88) der Nut und dem Wandbereich gebildet wird, wo sich die Nut befindet, zwischen etwa 5 und 35° beträgt.

4. Kammer nach einem der vorangehenden Ansprüche, **dadurch gekennzeichnet, dass** die Seitenflächen (76, 78, 86, 88) der Nut nach stromabwärts um einen Winkel ((β) voneinander divergieren, der zwischen etwa 2 und 10° beträgt.

5. Kammer nach einem der vorangehenden Ansprüche, **dadurch gekennzeichnet, dass** das stromabwärtige Ende der Nut (70, 80) um 1 bis 2 mm breiter ist als die Basis der Nut.

6. Kammer nach einem der vorangehenden Ansprüche, **dadurch gekennzeichnet, dass** die Nut (70, 80) über eine ringförmige Reihe von ersten Öffnungen (72, 82) mit Luft versorgt wird, die sich im Wesentlichen parallel zu dem Wandbereich erstrecken, wo sich die Nut befindet.

7. Kammer nach Anspruch 6, **dadurch gekennzeichnet, dass** die Nut über eine ringförmige Reihe von zweiten Öffnungen (74, 84) mit Luft versorgt wird, die sich im Wesentlichen senkrecht zu dem Wandbereich erstrecken, wo sich die Nut befindet.

8. Kammer nach Anspruch 7, **dadurch gekennzeichnet, dass** die ersten Öffnungen (72, 82) mit den zweiten Öffnungen (74, 84) auf Lücke angeordnet sind.

9. Kammer nach einem der vorangehenden Ansprüche, **dadurch gekennzeichnet, dass** die Versorgungsöffnungen (72, 74, 82, 84) mit einem ihrer Enden im Bereich des Nutgrunds ausmünden.

10. Kammer nach einem der vorangehenden Ansprüche, **dadurch gekennzeichnet, dass** die Versorgungsöffnungen (72, 74, 82, 84) einen Durchmesser zwischen etwa 0,5 und 2 mm haben.

11. Kammer nach einem der vorangehenden Ansprüche, **dadurch gekennzeichnet, dass** sie zwischen 100 und 500 Öffnungen (72, 74, 82, 84) zur Luftversorgung der Nut aufweist.

12. Turbomaschine, wie etwa Turbostrahltriebwerk oder Turboprop-Triebwerk für Flugzeuge, **dadurch gekennzeichnet, dass** sie eine Brennkammer (10) nach einem der vorangehenden Ansprüche aufweist.

13. Turbomaschine nach Anspruch 12, enthaltend ein Leiter (12), die stromabwärts der Brennkammer (10) gelagert ist, wobei diese Leiter zwei koaxial verlaufende Ringen (60, 62), eine innere und eine äußere, aufweist, zwischen denen sich die Schaufeln (64) erstrecken, **dadurch gekennzeichnet, dass** der stromabwärtige Endabschnitt der Außenwand (16) der Kammer, wo sich die Nut (70) befindet, einen Durchmesser hat, der sich nach stromabwärts vergrößert und geringfügig kleiner als der Innendurchmesser der äußeren Ring (62) dem Leiter ist.

## Claims

1. Annular combustion chamber of a turbomachine, comprising two coaxial walls of revolution (14,16) extending one inside the other and delimiting the chamber between them, each of these walls comprising at least one annular groove (70,80) extending around the longitudinal axis of the chamber and opening out inside the chamber, this groove being supplied with cooling air through orifices (72,74,82,84) formed in the wall and opening out at one of their ends in the groove and at the other end outside the chamber, **characterised in that** the groove has in cross section a substantially U or V shape that is splayed towards the downstream end and comprises two lateral annular surfaces (76,78,86,88) inclined with respect to the area of the wall at which the groove is situated.

2. Chamber according to claim 1, **characterised in that** the groove (70,80) is formed at the downstream end of each wall (14,16) of the chamber, close to an annular flange (20,24) for fixing this wall to a casing (22,26) of the chamber.

3. Chamber according to claim 1 or 2, **characterised in that** the angle (α1, α2) formed between each lateral surface (76,78,86,88) of the groove and the area of the wall where the groove is situated is between approximately 5° and 35°.

4. Chamber according to any of the preceding claims, **characterised in that** the lateral surfaces (76,78,86,88) of the groove diverge from each other towards the downstream end by an angle ((β) of between approximately 2° and 10°.

5. Chamber according to any of the preceding claims, **characterised in that** the downstream end of the groove (70,80) is wider than the base of the groove by approximately 1 to 2 mm.

6. Chamber according to any of the preceding claims, **characterised in that** the groove (70,80) is supplied with air by an annular row of first orifices (72,82) that extend substantially parallel to the area of the wall where the groove is situated.

7. Chamber according to any of the preceding claims, **characterised in that** the groove is supplied with air by an annular row of second orifices (74,84) that are substantially perpendicular to the area of the wall where the groove is situated.

8. Chamber according to any of the preceding claims, **characterised in that** the first orifices (72,82) are disposed so as to be staggered with the second orifices (74, 84).

9. Chamber according to any of the preceding claims, **characterised in that** the supply orifices (72,74,82,84) open out at one of their ends at the bottom of the groove.

10. Chamber according to any of the preceding claims, **characterised in that** the supply orifices (72,74,82,84) have a diameter of between approximately 0.5 and 2 mm.

11. Chamber according to any of the preceding claims, **characterised in that** it comprises between 100 and 500 orifices (72,74,82,84) supplying the groove with air.

12. Turbomachine, such as an aircraft jet engine or turboprop engine, **characterised in that** it comprises a combustion chamber according to any of the preceding claims.

13. Turbomachine according to claim 12, comprising a distributor (12) mounted downstream of the combustion chamber (10), this distributor comprising two coaxial cylinders (60,62) respectively internal and external between which blades (64) extend, **characterised in that** the downstream end part of the external wall (16) of the chamber where the groove (70) is situated has a diameter that increases towards the downstream end and is slightly less than the inside diameter of the external cylinder (62) of the distributor.
